# EUROPEAN PATENT APPLICATION

(11) **EP 3 492 297 A1**
(43) Date of publication of application: **05.06.2019**
(21) Application number: 18168412.7
(22) Date of filing: 20.04.2018
(51) Int. Cl.: B60K 37/06

(54) **SYSTEM AND METHOD FOR PROVIDING A CUSTOMIZABLE DISPLAY IN A VEHICLE**

(30) Priority: 30.11.2017 US 201715828419
(71) Applicant: Zulqarnain, Ali, 2820 Gentofte (DK)
(72) Inventor: Zulqarnain, Ali, 2820 Gentofte (DK)
(74) Representative: Sun, Yiming

(57) **Abstract**

Embodiments presented include a system and method for customizing the display format of an electronic instrument panel. The system comprises a display management server, the electronic instrument panel and a database storing a plurality of display format. The electronic instrument panel comprises a dashboard display unit, a control panel associated with the display unit and a memory unit associated with the control panel. The control panel is configured to control the display format of the dashboard display unit based on the input received from the user interface unit associated with the user. A user interface unit associated with the user is configured to download at least one display format to the memory unit associated with the control panel via the display management platform to customize the display format in the dashboard display unit.

## Description

### BACKGROUND OF THE INVENTION

### A. Technical field

The present invention generally relates to a display system of a vehicle, and more specifically relates to a system and method for customizing the display format of the electronic instrument panel.

### B. Description of related art

In general, every vehicles such as motor vehicles, railed vehicles, cars, trucks, buses comprise one or more built-in display that display vehicle diagnostic data about the engine, fuel system, brake system, door locks and other data like speed, rpm, etc. In early days, for displaying each of the vehicle diagnostic data a separate display unit is disposed on the vehicle. Hence, if the user wants to view a specific vehicle diagnostic data, the user required to identify the desired display by going through a plurality of display unit. Further, if user wants to customize the display unit for convenience, the user needs to spend lot of money and time as it requires changes in hardware, gauges and controls of the vehicle. Further, these solutions are permanent modification to the vehicle and may reduce the factory look of the vehicle reducing the resell value.

Modern vehicles are equipped a single dashboard display unit, where all the vehicle diagnostic data is displayed. However, these displays are not configured to allow the vehicle operator or user to customize the information to be displayed. For instance, if the user wants to change the display format of the vehicle diagnostic data displayed in the vehicle, the user is not allowed to customize the display. Most user measures the vehicles personality and character from the vehicles instrument panel. Hence, there is a need for a system and method for customizing the display format of the electronic display panel. Further, there is a need for a system and method that allows users to independently modify the appearance and characteristic of the display according to the individual needs, for example, some users opt to display in digital format, some user wish to see display unit with a virtual visual effect, some users opt to display in gauges with needles and alarm lights, etc. Henceforth, it is important to make all those options available and let the user choose which options suit them via a customizable instrument panel.

### SUMMARY OF THE INVENTION

The present invention discloses a system and method for customizing the display format of an electronic instrument panel.

According to the present invention, the system is configured to allows a user to customize the display format in the electronic instrument panel integrated to the vehicle. The system is further configured to modify the display format of the electronic instrument panel according to the need of the user of the vehicle. The system comprises the electronic instrument panel, a display management server, a user interface unit associated with the user and a database. In one aspect, the user interface unit is at least one of a mobile and/or handheld electronic devices, smart phones and portable computers such as tablet, pad-styled computers. The electronic instrument panel comprises a dashboard display unit, a control panel associated with the display unit and a memory unit associated with the control panel. The control panel further comprises a data transfer module including a Bluetooth unit or any other mechanism for data transfer. The dashboard display server of the electronic instrument panel attached to the vehicle is customizable by the user.

In an embodiment, the database stores a plurality of display format, one or more pre-designed display format, and in various forms including all display tools for the dashboard display unit. In one embodiment, the user is enabled to download at least one display format to the memory unit associated with the control panel via the display management server to customize the display format in the dashboard display unit. In one embodiment, the electronic instrument panel communicates with the display management server and the user interface unit via a wireless network. The control panel associated with the display unit is configured to receive vehicle operating information to be displayed by the display unit. The control panel is further configured to control the display format of the dashboard display unit based on the input received from the user interface unit associated with the user.

In one embodiment, the display management server is at least one of a general or special purpose computer or a computing device. The display management server comprises a processor in communication with a memory unit storing a set of program modules. The set of program modules comprises a registration module, an input module, a search engine module, a control module and a data transfer module. The registration module, executed by the processor, configured to allow the user to register by providing relevant user information to identify the user and the vehicle. The input module, executed by the processor, configured to specify criteria for identifying a desired display format. The search engine module, executed by the processor, configured to search and display the desired display format to the user from the database. The control module, executed by the processor, configured to allow the user to select the display format to be displayed by the display unit. The data transfer module, executed by the processor, configured to transmit the selected display format to the memory unit associated with the control panel.

In an embodiment, the present invention also relates to a method for selecting the display format of the electronic instrument panel. In an embodiment, the method comprising the steps of: receiving, at the control panel associated with the dashboard display unit, the vehicle operating information from the vehicle. In one step, storing, in the memory unit associated with the control panel, the vehicle operating information of the vehicle. In another step, registering, to the computing device, via the registration module, by providing relevant user information to identify the user and the vehicle. In another step, specifying, at the processor, via the input module, criteria for identifying the desired display format. In another step, searching, at the database in communication with the computing device, via a search engine module, the desired display format. Further, the desired display format is displayed to the user via the user interface unit. In another step, selecting, at the processor of the computing device, via the control module, the display format to be displayed by the display unit. In another step, sending, at the processor, via the data transfer module, the selected display format to the memory unit associated with the control panel. In another step, displaying at the dashboard display unit, the selected display format by the control panel.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

### BRIEF DESCRIPTION OF DRAWINGS

The embodiments herein will be better understood from the following detailed description with reference to the drawings, in which:
**FIG. 1** is a block diagram of a system implemented in accordance with various embodiments.
**FIG. 2** illustrates a method for configuring the display format of a dashboard display unit in an embodiment of the present invention.
**FIG. 3** illustrate the user customized dashboard display unit of the electronic instrument panel installed in a vehicle in an embodiment of the present invention.

### DETAILED DESCRIPTION OF EMBODIMENTS

A description of embodiments of the present invention will now be given with reference to the Figures. It is expected that the present invention may be embodied in other specific forms without departing from its spirit or essential characteristics. It is also expected that the present invention may be embodied in mobile phones without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

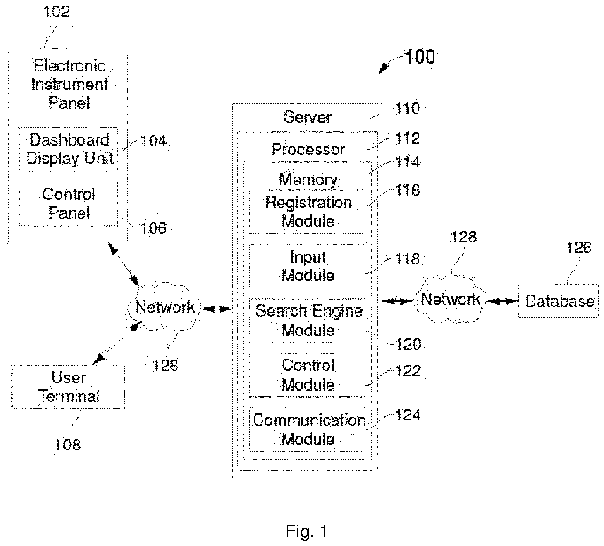

The present invention discloses a system and method for configuring the display format of a dashboard display in a vehicle. The system is configured to provide a customizable display in an electronic instrument panel integrated to the vehicle. The system is further configured to modify the display format of the electronic instrument panel according to the need of the user of the vehicle. **FIG. 1** is block diagram of the system **100** in accordance with various embodiments of the present invention. The system **100** comprises the electronic instrument panel **102,** a display management server **110,** a user interface unit **108** associated with the user and at least one database **126.** In an embodiment, the electronic instrument panel **102** comprises a dashboard display unit **104,** a control panel **106** associated with the display unit **104** and a memory module associated with the control panel **106.** The control panel **106** further comprises a data transfer module including a Bluetooth unit or any other mechanism for data transfer.

In one embodiment, the display management server **110** in communication with the electronic instrument panel **102** allows the user to customize the display format of the electronic display panel. In one embodiment, the electronic instrument panel **102** is attached to the user's vehicle. In one embodiment, the electronic instrument panel **102** in communication with the display management server **110** allows the user to customize the display format of the electronic display panel via the user interface unit **108.** The control panel **106** associated with the dashboard display unit **104** is configured to receive vehicle operating information to be displayed by the display unit **104.** The control panel **106** is further configured to control the display format of the dashboard display unit **104** based on the input received from the user interface unit **108** associated with the user.

In one embodiment, the user interface unit **108** communicates with the electronic instrument panel **102** and the server **110** the electronic instrument panel **102** in communication with via a wireless network **128.** The user interface unit **108** is configured to provide user interface for interaction with the server **110** and the electronic instrument panel **102.** In an embodiment, the user interface unit **108** is at least one of a mobile and/or handheld electronic devices, smart phones and portable computers such as tablet, pad-styled computers. In an embodiment, the user interface unit **108** is configured to wirelessly communicate with the server for configuring the display format of the dashboard display unit **104** of the vehicle. In an embodiment, the user interface unit **108** communicates with the server **110** via the wireless communication network **128.** In an embodiment, the wireless network communication **128** could be WiFi network, WiMax network, Wireless local area network.

In an embodiment, the at least one database **126** stores a plurality of display format, one or more pre-designed display format, and in various forms including all display tools for the dashboard display unit. In one embodiment, the user is enabled to download at least one display format to the memory module associated with the control panel **106** via the server **110** to customize the display format in the dashboard display unit **104.** Additionally, at least one database **126** is accessible by the server **110.** In an embodiment, the at least one database **126** is integrated into the server **110** or separate from it. In an embodiment, the database **126** resides in the connected server **110** or in a cloud computing service. In an embodiment, regardless of location, the at least one database **126** comprise a memory to store and organize certain data for use by the server **110.** In some embodiment, the at least one database **126** stores user vehicle identification data uniquely identifying vehicle and respective user and plurality of display format. In an embodiment, the display format comprises at least one or more of one of music, alerts, wallpaper, text, pictures, videos or virtual card file (VCF) information. The display format further comprises options for selecting color, resolution, characteristic.

In an embodiment, the display management server **110** is a computer based device such as a computing device. In an embodiment, the display management server **110** operates as a single computer, which can be a hardware and/or software server, a workstation, a desktop, a laptop, a tablet, a mobile phone, a mainframe, a supercomputer, a server farm, and so forth. In an embodiment, the computer can be touchscreen and/or non-touchscreen and can run on any type of OS, such as iOS™, Windows™, Android™, Unix™, Linux™ and/or others. In an embodiment, the computer is in communication with networks **128.** Such communication can be via a software application, a mobile app, a browser, an OS, and/or any combination thereof. In an embodiment, the server **110** comprises a processor **112** and a memory **114.** The processor **112** is configured to carry out one or more of the steps, actions, and/or functions described herein, by using corresponding programming stored in the memory **114.** The processor **112** operably coupled to memory **114.** The memory **114** is integral to the server **110** or can be physically discrete (in whole or in part) from the server **110** as desired.

The memory **114** stores a set of set of program modules comprises a registration module **116,** an input module **118,** a search engine module **120,** a control module **122** and a data transfer module **124.** The registration module **116,** executed by the processor **112,** configured to allow the user to register by providing relevant user information to identify the user and the vehicle. The input module **118,** executed by the processor **112,** configured to specify criteria for identifying a desired display format. The search engine module **120,** executed by the processor **112,** configured to search and display the desired display format from the at least one database **126.** The control module **122,** executed by the processor **112,** configured to allows the user to select the display format to be displayed by the dashboard display unit **104.** The data transfer module **124,** executed by the processor **112,** configured to transmit the selected display format to the memory module associated with the control panel **106.**

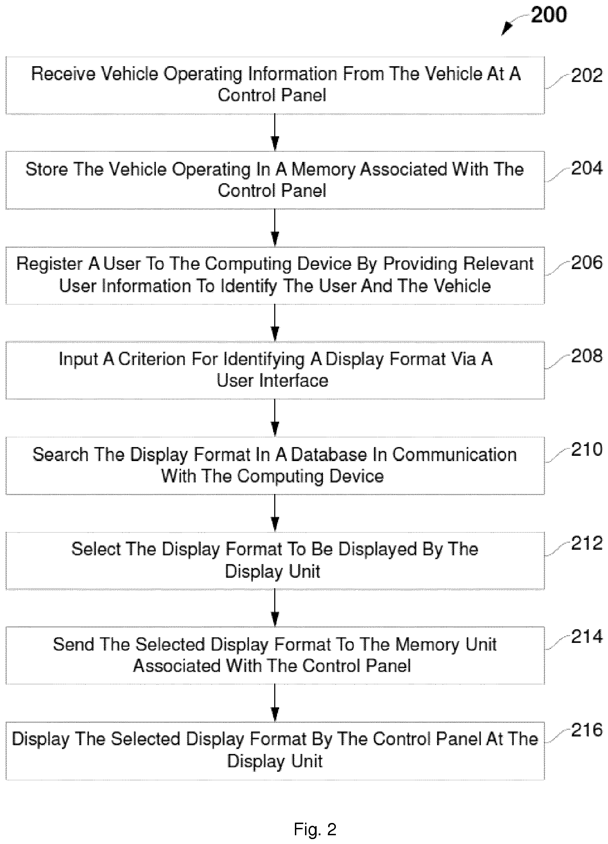

Referring to **FIG. 2****,** a method **200** for configuring the display format of the electronic instrument panel is disclosed. In an embodiment, the method comprising the steps of receiving, at the control panel associated with the dashboard display unit, the vehicle operating information from the vehicle, at step **202.** At step **202,** storing, in the memory module associated with the control panel, the vehicle operating information of the vehicle. At step **206,** registering to the computing device, via the registration module, by providing relevant user information to identify the user and the vehicle. At step **208,** specifying, at the processor, via the input module, criteria for identifying the desired display format. At step **210,** searching, at the database in communication with the computing device, via the search engine module, the display format in the database and the desired display format is displayed to the user. At step **212,** selecting, at the processor of the computing device, via the control module, the display format to be displayed by the display unit. At step **214,** sending, at the processor, via the data transfer module, the selected display format to the memory module associated with the control panel. At step **216,** displaying at the display unit, the selected display format by the control panel.

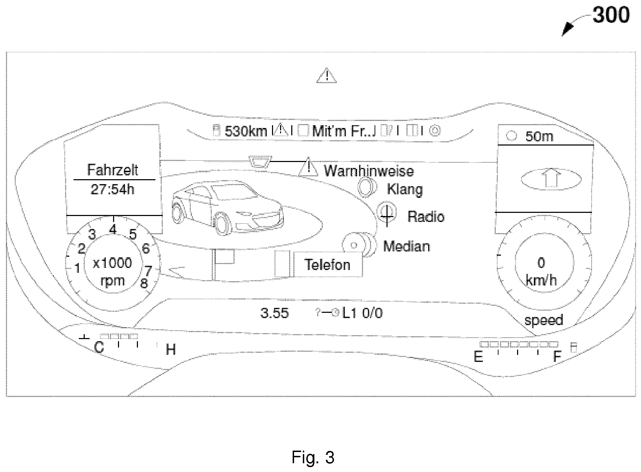

**FIG. 3** illustrates the user customized dashboard display unit **300** of the electronic instrument panel installed in the vehicle in an embodiment of the present invention. In one embodiment, the control panel is wired to the various controls of the vehicle such as accelerator, temperature gauge, fuel gauge, odometer to receive the vehicle operating information. In another embodiment, the control panel receives the display format to be displayed from the server by the user.

Although a single embodiment of the invention has been illustrated in the accompanying drawings and described in the above detailed description, it will be understood that the invention is not limited to the embodiment developed herein, but is capable of numerous rearrangements, modifications, substitutions of parts and elements without departing from the spirit and scope of the invention.

The foregoing description comprises illustrative embodiments of the present invention. Having thus described exemplary embodiments of the present invention, it should be noted by those skilled in the art that the within disclosures are exemplary only, and that various other alternatives, adaptations, and modifications may be made within the scope of the present invention. Merely listing or numbering the steps of a method in a certain order does not constitute any limitation on the order of the steps of that method. Many modifications and other embodiments of the invention will come to mind to one skilled in the art to which this invention pertains having the benefit of the teachings presented in the foregoing descriptions. Although specific terms may be employed herein, they are used only in generic and descriptive sense and not for purposes of limitation. Accordingly, the present invention is not limited to the specific embodiments illustrated herein.

## Claims

1. A system for providing a customizable dashboard display in a vehicle, comprising:
a dashboard display unit configurable by a user;
a control panel associated with the dashboard display unit configured to:
receive vehicle operating information to be displayed by the display unit, and
control a display format of the dashboard display unit based on an input received from a user interface associated with the user;
a memory unit associated with the control panel configured to store the display format and vehicle operating information;
a database for storing a plurality of display format, one or more pre-designed display format, and in various forms including all display tools for the dashboard display unit; and
a computing device in communication with the database, the control panel associated with the display unit, comprises a memory to store a set of program modules and a processor to execute the set of program modules, wherein the set of program module comprises:
a registration module executed by the processor, configured to allow a user to register by providing relevant user information to identify the user and the vehicle,
an input module configured to specify criteria for identifying a desired display format,
a search engine module configured to search and display the desired display format from the database,
a control module executed by the processor, configured to allows the user to select the display format to be displayed by the display unit, and
a data transfer module executed by the processor, configured to transmit the selected display format to the memory unit associated with the control panel.

2. The system according to claim 1, where the dashboard display unit, control panel and the memory unit are positioned as an integral part of the vehicle.

3. The system according to claim 1, wherein the control panel further comprises a Bluetooth module or other data transfer mechanism.

4. The system according to claim 1, wherein the user interface is configured to access the computing device via a wireless network.

5. The system according to claim 1, wherein the user interface is in communication with the control panel associated with the display unit.

6. The system according to claim 1, wherein the display format comprises option for selecting a color of the display unit.

7. The system according to claim 1, wherein the display format comprises at least one of music, alerts, wallpaper, text, pictures, videos or virtual card file (VCF) information.

8. The system according to claim 1, wherein the user interface is at least one of tablet computers, personnel computers, personnel digital assistants, smart phones, smart televisions, palm tops, phablets and laptops.

9. The system according to claim 1, wherein the memory unit is at least one of a volatile memory, non-volatile memory, read only memory (ROM), random access memory (RAM), and a flash memory.

10. The system of claim 1, wherein the wireless network is at least one of a Local Area Network, a Wide Area Network, a Wireless Network, a telecommunication network, a mobile network, and an Internet.

11. The system according to claim 1, wherein the computing device is a server.

12. The system according to claim 1, wherein the control panel is wired to a control of the vehicle for receiving vehicle information.

13. The system according to claim 1, wherein the control is one or more of accelerator, temperature gauge, fuel gauge and odometer.

14. A method for providing a customizable dashboard display in a vehicle, comprising the steps of:
receiving, at a control panel associated with a dashboard display unit, a vehicle operating information from the vehicle;
storing, in a memory associated with the control panel, the vehicle operating information of the vehicle;
registering, to the computing device, via a registration module, by providing relevant user information to identify a user and the vehicle;
specifying, at a processor of the computing device, via an input module, criteria for identifying a desired display format;
searching, at a database in communication with the computing device, via a search engine module, the desired display format and displaying the desired display format to the user;
selecting, at the processor, via a control module, the display format to be displayed by the display unit;
sending, at the processor, via a data transfer module, the selected display format to the memory unit associated with the control panel; and
displaying at the display unit, the selected display format by the control panel.
